# EUROPÄISCHE PATENTSCHRIFT

(11) **EP 1 543 670 B1**
(45) Veröffentlichungstag und Bekanntmachung des Hinweises auf die Patenterteilung: **13.09.2006**
(21) Anmeldenummer: 03798050.5
(22) Anmeldetag: 31.07.2003
(51) Int. Cl.: H04L 29/12, H04L 12/28

(54) **VERFAHREN ZUM TRANSPARENTEN AUSTAUSCH VON DATENPAKETEN**
METHOD FOR TRANSPARENTLY EXCHANGING DATA PACKETS
PROCEDE D'ECHANGE TRANSPARENT DE PAQUETS DE DONNEES

(30) Priorität: 25.09.2002 DE 10244612
(43) Veröffentlichungstag der Anmeldung: 22.06.2005
(73) Patentinhaber: SIEMENS AKTIENGESELLSCHAFT, 80333 München (DE)
(72) Erfinder: LINDEMANN, Werner, 45473 Mülheim (DE); SCHÖNFELD, Norbert, 44145 Dortmund (DE)
(86) Internationale Anmeldenummer: PCT/DE2003/002583
(87) Internationale Veröffentlichungsnummer: WO 2004/030317

(56) Entgegenhaltungen:
- WO-A-01/71977
- US-A1- 2002 002 621
- US-A1- 2002 129 165

## Beschreibung

Die Erfindung betrifft ein Verfahren und eine Anordnung für einen bedarfsweise transparenten Austausch von Daten eines in einem paketorientierten Netzwerk angeordneten Netzelements über ein Netzknotenelement mit einer netzwerk-externen Einrichtung.

Moderne Kommunikationsprotokolle in paketorientierten Netzwerken, z.B. das Internetprotokoll IP, verwenden für die Adressierung der Netzelemente und die - in der Fachwelt auch mit "Routing" bezeichnete - Wegebestimmung der Datenpakete zwischen Ursprung und Ziel eine Zieladresse. Diese Adresse wird für das Internetprotokoll IP gebildet aus einer IP-Adresse und einer UDP- bzw. TCP Portnummer (User Datagram Protocol bzw. Transmission Control Protocol). Im folgenden wird unter Bezugnahme auf die IP-Adresse in Verbindung mit der zugehörigen Portnummer vereinfachend von der Adresse des Netzelements gesprochen. Eine derartige Adressierung erleichtert die globale Kommunikation und Erreichbarkeit, erfordert aber eine große Anzahl weltweit eindeutiger Adressen.

Aus diesem Grund werden oftmals Verfahren zur Reduktion der Anzahl der für die weltweite Kommunikation benötigten globalen Adressen eingesetzt. Eine Möglichkeit ist die Zuordnung privater, d.h. nur lokal eindeutiger und daher nur lokal gültiger Adressen in lokalen Netzwerken, auch LAN (Local Area Networks) genannt.

Für eine Kommunikation mit Kommunikationspartnern außerhalb des lokalen Netzwerks ist eine Umsetzung der lokalen Adressen in andere lokale bzw. globale Adressen notwendig. Dieses Verfahren wird in der Fachwelt als Adressumsetzung oder auch NAT (Network Address Translation) bzw. NPAT (Network and Port Address Translation) bezeichnet. Beide Umsetzungsverfahren sind beispielsweise im Dokument RFC 1631 (Request for Comment) der IETF (Internet Engineering Task Force) definiert.

Für die Wegebestimmung (Routing) von Datenpaketen werden unter Anwendung von Verfahren zur Adressumsetzung die Adressen des lokalen Netzwerks auf öffentlich registrierte - globale - Adressen umgesetzt.

Eine Sonderform der Adressumsetzung liegt vor, wenn die Adressen aller Netzelemente im paketorientierten Netzwerk auf eine einzige Adresse umgesetzt werden. Damit lassen sich die Adressen einzelner oder mehrerer Netzelemente verbergen - in der Fachwelt daher auch "Masquerading" genannt - indem ein paketorientiertes Netzwerk nach außen hin durch z.B. lediglich eine einzige Adresse repräsentiert wird.

Netzelemente - z.B. vernetzte Rechnersysteme wie Arbeitsplatzrechner - die nur innerhalb des LAN miteinander kommunizieren, benötigen für eine LAN-interne Datenkommunikation keine Zuweisung von globalen Adressen. Eine Kommunikation mit einem außerhalb des LAN - insbesondere im Internet - lokalisierten Endpunkt aufbauendes Netzelement wird über ein vorbehaltenes Netzelement, im folgenden Netzknoteneinrichtung genannt, eine globale Adresse anhand einer Zuordnungstabelle zugeordnet. Funktionen einer derartigen Netzknoteneinrichtung übernimmt meist ein hierfür vorgesehener Router, oder auch für eine Netzwerkverwaltung eingesetzte Rechnersystem, auch Proxy-Server oder Gateways genannt. Im folgenden wird auf alle derartige Netzknoteneinrichtungen vereinfachend mit dem Begriff "Router" Bezug genommen.

Derartige Router sind je nach Beschaffenheit - bezüglich Topographie, Kommunikationsprotokollen, Zugriffsverfahren - der zu verbindenden Netzwerke mit spezialisierten Funktionen ausgestattet. Im folgenden werden Router betrachtet, die ein LAN mit einem Datenkommunikationsdienstanbieter, einem sogenannten Provider, verbinden. Der Provider weist i.a. der verbundenen Netzknoteneinrichtung für die Dauer einer Kommunikationsverbindung eine globale Adresse zu, über die Verbindungswünsche von Netzelementen aus dem LAN mittels der erwähnten Adressumsetzung bearbeitet werden.

Auf den Provider wird an gegebener Stelle auch als "Externe Einrichtung" Bezug genommen, um dessen topographischen Aspekt als Endpunkt einer Punkt-zu-Punkt-Kommunikation mit dem Router herauszustellen. Unter dem Begriff der Datenkommunikation wird der Austausch paketorientierter Daten verstanden, die z.B. einen rechnergestützten Datenaustausch oder auch einen Datenaustausch von Kommunikationseinrichtungen dienen.

Eine Anbindung an das Netzwerk des Providers ist mit vielerlei Zugangsmöglichkeiten möglich. Aus Gründen der Übersichtlichkeit wird im folgenden exemplarisch ein Zugang auf Basis eines Punkt-zu-Punkt-Kommunikationsprotokolls - abkürzend auch PPP genannt - erläutert. Das PPP ermöglicht einen Austausch von Daten über synchrone und asynchrone Wähl- oder Standleitungen und arbeitet unabhängig von der jeweils verwendeten physikalischen Schnittstelle unter der Voraussetzung des Vorhandenseins einer transparenten, voll duplexfähigen Leitung.

In Erweiterung des PPP-Protokolls wird von der IETF in dem Dokument RFC 2516 ein Protokoll beschrieben, mit dem PPP-Sitzungen über ein Übertragungsmedium - insbesondere dem sogenannten Ethernet - mit einem Zugriff multipler Kommunikationspartner ermöglicht werden. Dabei werden PPP-Datenpakete in Ethernet-Rahmen eingekapselt. Auf dieses Protokoll wird im folgenden mit dem Begriff PPPoE (PPP over Ethernet) Bezug genommen. Mit dem erweiterten paketorientierten Protokoll PPPoE wird eine logische Punkt-zu-Punkt-Verbindung über das ansonsten verbindungslose Medium Ethernet ermöglicht.

Ein Datenpaket gemäß des IP (Internetprotokoll) wird in ein Datenpaket gemäß des PPPoE-Protokolls konvertiert, indem das sogenannte IP-Datagramm - das ursprüngliche IP-Datenpaket - mit einem PPP-Kopfeintrag ("Header") sowie mit einem PPPoE-Header versehen wird. Das Datenpaket wird schließlich zur Übertragung über das LAN in einem Ethernetrahmen eingekapselt.

Ein Anwendungsbeispiel für eine Datenverbindung unter Verwendung des PPPoE-Protokolls ist beispielsweise ein aus mehreren Arbeitsplatzrechnern und einem Router gebildetes LAN, wobei ein Austausch von Datenpaketen der Arbeitsplatzrechner mit dem Router sowohl gemäß des PPPoE-Protokolls als auch unter Verwendung des Internetprotokoll erfolgen kann. Die Daten beider vorgenannten möglichen Protokolle werden als Datenpaket über das Ethernet transportiert. Dazu werden die Daten in einen sogenannten Ethernet-Rahmen eingekapselt, den der Router an eine mit ihm verbundene Modulier-/Demoduliereinrichtung (abkürzend auch Modem) weitergibt.

Das Modem moduliert diese Datenpakete in einen Datenstrom und gibt diesen an den Provider, z.B. über eine feste Kommunikationsverbindung, weiter. Die Rückrichtung vom Provider erfolgt in analoger Weise mit einer Demodulation des Datenstroms in Datenpakete.

Eine oben beschriebene PPPoE-Kommunikationsverbindung kommt insbesondere bei einer xDSL-Datenverbindung (Digital Subscriber Line, wobei "x" für unterschiedliche Varianten wie z.B. Asymmetrical DSL, ADSL oder Symmetric Bitrate DSL, SDSL steht) zum Einsatz.

Durch die eingangs erwähnte Adressumsetzung ergibt sich auch bei dem erwähnten Einsatzfall der Vorteil, dass mehrere Arbeitsplatzrechner mit unterschiedlichen, lediglich LAN-intern gültigen IP-Adressen über eine einzige IP-Adresse des Routers an der Datenkommunikation beteiligt sind. Diese IP-Adresse wird üblicherweise vom Provider für die jeweilige Datenkommunikationssitzung zugewiesen.

Die Adressumsetzung wird vom Router gewöhnlich innerhalb der IP-Schicht vorgenommen, die im weitesten Sinn auf der Schicht 3 des ISO/OSI-Schichtenmodells (International Standardization Organization, Open Systems Interconnection) lokalisiert ist. Durch diese Adressumsetzung ergeben sich Probleme, die eine uneingeschränkte Nutzung unterschiedlicher Applikationen verhindern und von denen einige im folgenden kurz angesprochen werden.

Probleme ergeben sich bei einem durch Applikationen - wie beispielsweise "active ftp" oder "Netmeeting" - benötigten oder per Spezifikation geforderten Austausch von IP- und/oder Portadressen in übergeordneten Protokollschichten. Da herkömmliche Router diese Protokollschichten nicht bearbeiten, ergibt sich ein Konflikt bei der eindeutigen Adresszuweisung.

Ein weiteres Problem ergibt sich, wenn eine ankommende Verbindung zu einem Netzelement, d.h. zu dessen sogenannten logischen Port, innerhalb des LAN aufgebaut werden soll, welche nicht von einen gehenden Verbindungsaufbau auf dem gleichen Port ausging. In diesem Fall kann der Router aus der empfangenen Portadresse das anzusprechende Netzelement innerhalb des LAN nicht identifizieren. Ein Serverbetrieb eines im LAN lokalisierten Netzelements ist damit nicht ohne weiteres möglich.

Bestimmte auf einen PPPoE-Treiber in einem Netzelement des LAN aufbauende Applikationen können nicht verwendet werden wenn der Router in Richtung LAN kein PPPoE-Protokoll anbietet.

Das Dokument WO 01/71977 beschreibt einen häuslichen Netzwerkverbund mit multiplen Teilnehmern in dem PPPoE-Verbindungen aufgebaut werden und wobei eine externe Einrichtung den Teilnehmern Adressen zuweisst.

Aufgabe der Erfindung ist es, eine Anordnung und ein Verfahren anzugeben, bei deren Anwendung die obigen Probleme vermieden werden.

Eine Lösung der Aufgabe erfolgt hinsichtlich ihres Verfahrensaspekts durch ein Verfahren mit den Merkmalen des Patentanspruchs 1 und hinsichtlich ihres Vorrichtungsaspekts durch eine Anordnung mit den Merkmalen des Patentanspruchs 11.

Ein aus mehreren Netzelementen bestehendes paketorientiertes Netzwerk ist über eine Netzknoteneinrichtung mit einer externen Einrichtung, beispielsweise einem sogenannten Internet Service Provider (ISP) verbunden. Im Zuge eines Verbindungsaufbaus - welcher im Allgemeinen mit einer Übermittlung eines Benutzernamens und gegebenenfalls eines Passworts an die externe Einrichtung einhergeht - zwischen einem ersten Netzelement und der externen Einrichtung wird vom ersten Netzelement bzw. dem Netzknotenelement eine für die Verbindung zu verwendende Adresse von der externen Einrichtung bezogen. Unter der Adresse des Netzelements ist insbesondere eine Internet-Protokolladresse (IP-Adresse) zu verstehen. Die vormals zugewiesene, nur innerhalb des paketorientierten Netzwerks gültige Adresse - lokale Adresse - des ersten Netzelements wird im Zuge des Verbindungsaufbaus z.B. mit der von der externen Einrichtung bezogenen Adresse überschrieben.

Erfindungsgemäß wird eine Überprüfung von Nachrichtenkopfeinträgen der zwischen der externen Einrichtung und dem Netzelement ausgetauschten Datenpakete vorgenommen. Wird in dem charakterisierenden Eintrag eines Datenpakets ein erweitertes paketorientiertes Protokoll detektiert, so wird zwischen dem zugehörigen-Netzelement und der externen Einrichtung eine vorübergehend transparente Verbindung aufgebaut, wobei statt der dem Netzelement im paketorientierten Netzwerk zugewiesenen Adresse die von der externen Einrichtung an die Netzknoteneinrichtung übergebene Adresse verwendet wird. Als erweitertes paketorientiertes Protokoll wird beispielsweise ein Kommunikationsprotokoll gemäß PPPoE (Punkt-zu-Punkt-Protokoll over Ethernet) verwendet.

Ein wesentlicher Vorteil des erfindungsgemäßen Verfahrens ist darin zu sehen, dass eine bedarfsweise "transparente" Verbindung automatisch erfolgt. Damit entfallen bisher verwendete Verfahren, wie etwa in der Netzknoteneinrichtung erfolgende, aufwändige Protokollanalysen höherer Protokollschichten innerhalb des Kommunikationsprotokolls, z.B. unter Verwendung eines sogenannten "Application Level Gateways", welches in den Dokumenten RFC 3027 oder RFC 3022 beschrieben wird.

Bei einer transparenten Verbindung wird zur Kommunikation zwischen dem beteiligten Netzelement und der externen Einrichtung das PPPoE-Protokoll verwendet, wobei eine Adressumsetzung in der Netzknoteneinrichtung unterbleibt. Stattdessen wird vom Netzelement die beim Verbindungsaufbau von der externen Einrichtung bezogene Adresse verwendet und über die Netzknoteneinrichtung unverändert an die externe Einrichtung weitergegeben.

In vorteilhafter Weise ist der Aufbau einer transparenten Verbindung durch jedes Netzelement innerhalb des paketorientierten Netzwerkes durchführbar. Die Netzknoteneinrichtung muss also nicht - wie bisher üblich - Datenpakete kommender Verbindungen auf "neuen" Portadressen zu einem festkonfigurierten Rechnersystem leiten. Derartige, im Stand der Technik bekannte Konfigurationen, werden auch als "Exposed Machines" bezeichnet.

In vorteilhafter Weise ist damit die Verwendung eines PPPoE-Treibers in einem Netzelement trotz einer Verwendung einer leitwegebestimmenden Netzknoteneinrichtung, insbesondere Router, möglich. Damit ist die vorteilhafte Nutzung von Diensten der externen Einrichtung, insbesondere eines sogenannten ISP (Internet Service Provider) möglich, welche von einer Anmeldung eines Teilnehmers an dem Netzelement abhängig sind.

In vorteilhafter Weise ist ein Betrieb des über eine transparente Verbindung mit der externen Einrichtung verbundenen Netzelements als Server ohne weitere Maßnahmen realisierbar.

In vorteilhafter Weise ist neben einer meist durch die externe Einrichtung festgelegten maximalen Anzahl von transparenten Verbindungen, die Verwaltung von "herkömmlichen" - d.h. mit einer Adressumsetzung und Leitwegeführung erfolgenden - Verbindungen der übrigen Netzelemente weiterhin möglich.

Vorteilhafte Weiterbildungen der Erfindung sind in den Unteransprüchen angegeben.

In vorteilhafter Weise erfolgt vor einer Einrichtung der transparenten Verbindung für ein Netzelement eine Überprüfung, ob für mindestens ein anderes Netzelement bereits eine derartige transparente Verbindung besteht. Eine derartige maximale Anzahl transparenter Verbindungen und/oder "herkömmlicher" Verbindungen - siehe oben - hängt beispielsweise von Vorgaben der externen Einrichtung ab.

In vorteilhafter Weise wird eine Beendigung der transparenten Verbindung herbeigeführt, sobald eine Verbindungsabbauanforderung - in der Fachwelt auch mit einem PPPoE-Active-Discovery-Terminate-Vorgang bezeichnet - detektiert wird. Eine derartige Verbindungsabbauanforderung wird beispielsweise durch ein Datenpaket mit vorbehaltener Struktur, auch Verbindungssteuerungselement genannt, in einem charakterisierenden Eintrag übermittelt.

Vorteilhaft wird eine derartige Verbindungsabbauanforderung auch dann ausgelöst, wenn eine vordefinierbare Zeitperiode - in der Fachwelt auch als "Timeout" bezeichnet - überschritten wurde, innerhalb der kein Austausch von Datenpaketen nach dem erweiterten paketorientierten Protokoll erfolgt ist. Eine derartige Maßnahme vermeidet eine Belegung transparenter Verbindungen für den Fall dass ein die Verbindungsabbauanforderung transportierendes Verbindungssteuerungselement durch einen Übertragungsfehler nicht eintrifft.

Ein Ausführungsbeispiel der Erfindung wird im folgenden anhand der Zeichnung näher erläutert.

Dabei zeigen:
- Fig. 1:: Ein Strukturbild zur schematischen Darstellung einer Datenkommunikationsverbindung zwischen einem paketorientiertem Netzwerk und einer externen Einrichtung, und
- Fig. 2:: Ein Strukturbild zur schematischen Darstellung einer erfindungsgemäßen Netzknoteneinrichtung.

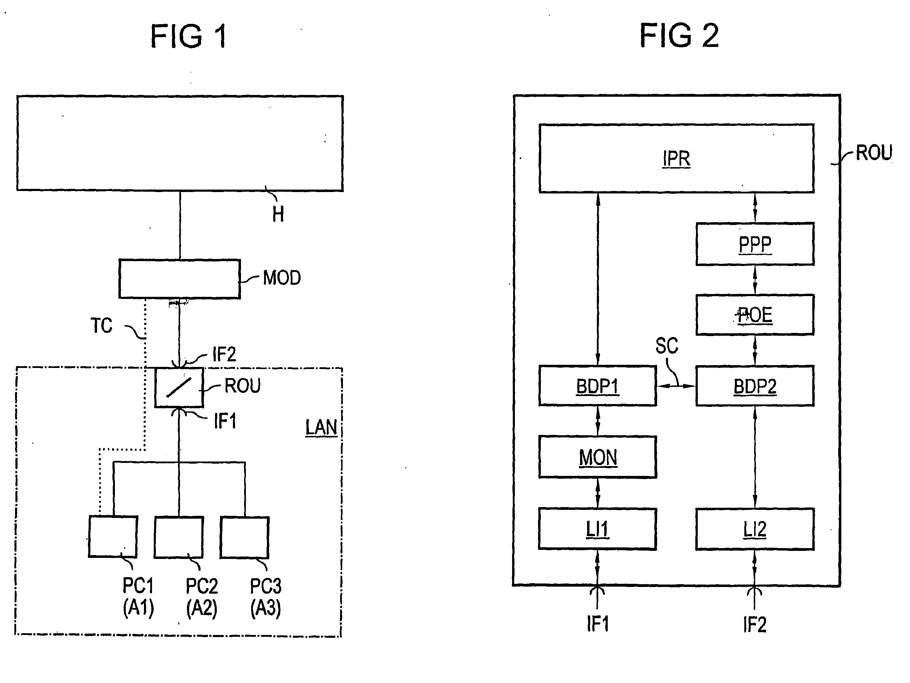

In Fig. 1 ist ein paketorientiertes Netzwerk LAN mit einem ersten Netzelement PC1, einem zweiten Netzelement PC2 sowie einem dritten Netzelement PC3 dargestellt.

Die Netzelemente PC1,PC2,PC3 sind untereinander sowie zu einer Netzknoteneinrichtung ROU über ein gemeinsames Übertragungsmedium, beispielsweise einem Ethernet, verbunden. Die Netzknoteneinrichtung ROU verfügt über eine erste Netzwerkschnittstelle IF1 zum Anschluss an das paketorientierte Netzwerk LAN sowie über eine zweite Netzwerkschnittstelle IF2, welche die Netzknoteneinrichtung ROU mit einem Eingang einer Modulier-/Demoduliereinrichtung MOD - auch Modem genannt - verbindet. Zwischen der zweiten Netzwerkschnittstelle IF2 und dem Eingang des Modems MOD werden ebenso wie im paketorientierten Netzwerk LAN Daten auf paketorientierter Basis ausgetauscht.

In einer alternativen Ausführungsform sind Modulier-/Demodulierfunktionen in die Netzknoteneinrichtung ROU-integriert, wodurch sich der Einsatz des Modems MOD erübrigt.

Die Netzknoteneinrichtung ROU ist beispielsweise als Router, oder alternativ auch als Gateway oder als Proxy-Server ausgeführt.

Das Modem MOD ist mit einer externen Einrichtung H verbunden. Die Verbindung des Modems MOD zur externen Einrichtung H erfolgt beispielsweise über eine festzugeordnete Telekommunikationsleitung.

Das erfindungsgemäße Verfahren ist im übrigen nicht auf ein physikalisches Übertragungsverfahren beschränkt. Alternativ zu einer festzugeordneten Telekommunikationsleitung sind beispielsweise auch Ausführungsformen unter Anwendung von ATM-(Asynchronous Transfer Mode) oder Funkstreckentechniken realisierbar.

Jedem jeweiligen Netzelement PC1, PC2, PC3 innerhalb des paketorientierten Netzwerks LAN ist eine jeweilige lokale, d.h. nur innerhalb des paketorientiertem Netzwerks LAN eindeutige Adresse A1,A2,A3 zugeordnet. Die Zuordnung der jeweiligen Adresse A1,A2,A3 zum jeweiligen Netzelement PC1, PC2, PC3 erfolgt z.B. dynamisch über einen - nicht dargestellten - Leitrechner bzw. Server oder auch fest eingestellt an einer dem jeweiligen Netzelement PC1,PC2,PC3 zugeordneten - nicht dargestellten - Netzwerkkarte. Für die dynamische Zuordnung der jeweiligen Adresse A1,A2,A3 wird z.B. das Protokoll DHCP (Dynamic Host Configuration Protocol) angewandt.

Der Netzknoteneinrichtung ROU wiederum ist im Allgemeinen von der externen Einrichtung H eine - nicht dargestellte - Adresse im Rahmen eines Verbindungsaufbaus zugewiesen worden, welche im - nicht dargestellten - verbundenen Netzwerk der externen Einrichtung H eindeutig bzw. gültig ist.

Die Kommunikation der Netzelemente PC1,PC2,PC3 untereinander sowie mit der Netzknoteneinrichtung ROU, erfolgt innerhalb des paketorientiertem Netzwerk LAN über Datenpakete z.B. in Form sogenannter Ethernet-Rahmen. Ein derartiger Ethernet-Rahmen besteht aus einem Ethernet-Nachrichtenkopfeintrag, auch "Header" genannt, sowie einem Prüfsummenfeld. Der Ethernet-Nachrichtenkopfeintrag sowie das Prüfsummenfeld eines derartigen Datenpakets umschließen ein Datagramm, das im folgenden detaillierter beschrieben wird.

Im Falle einer Kommunikation nach dem Internetprotokoll (IP) enthält der zugehörige Ethernet-Rahmen ein IP-Datagramm, welches durch einen IP-Nachrichtenkopfeintrag gekennzeichnet ist. Im Fall einer Kommunikation nach den PPPoE-Protokoll (Punkt-zu-Punkt-Protokoll over Ethernet) enthält das im Ethernet-Rahmen eingekapselte Datagramm ein PPPoE-Datagramm, welches durch einen PPPoE-Nachrichtenkopfeintrag gekennzeichnet ist. Das PPPoE-Datagramm enthält seinerseits ein Datagramm nach dem PPP-Protokoll (Point-to-Point Protocol) mit einem entsprechenden PPP-Nachrichtenkopfeintrag. Das PPPoE-Datagramm enthält des weiteren einen Nutzdateneintrag - auch "User Data" genannt - welcher wiederum ein IP-Datagramm mit der oben genannten Struktur enthält.

Im folgenden wird von einer Kommunikation der externen Einrichtung H über das Modem MOD sowie über die Netzknoteneinrichtung ROU mit Netzelementen PC1,PC2,PC3 des paketorientierten Netzwerks LAN ausgegangen. Die Netzelemente PC1,PC2,PC3 kommunizieren dabei in einem ersten Schritt mit der vermittelten Netzknoteneinrichtung ROU gemäß des Internetprotokolls. Zur Adressierung einer jeweiligen Netzeinrichtung PC1,PC2,PC3 führt die Netzknoteneinrichtung ROU eine Adressumsetzung - auch Network Address Translation, NAT genannt - zwischen der von der externen Einrichtung H zugewiesenen Adresse - insbesondere in Form einer Internet Protocol-Adresse, IP-Adresse - und der jeweiligen, nur im paketorientiertem Netzwerk LAN gültigen Adresse A1,A2,A3 durch.

In einem zweiten Schritt wird davon ausgegangen, dass das erste Netzelement PC1 das Kommunikationsprotokoll ändert, d.h. statt des Internetprotokolls jetzt eine PPPoE-Kommunikationsverbindung initiiert. Die Netzknoteneinrichtung ROU detektiert diesen Wechsel in einer noch zu beschreibenden Weise und richtet im folgenden eine transparente Verbindung TC - in der Zeichnung durch eine punktierte Linie symbolisiert - ein. Die in der Zeichnung dargestellte, die transparente Verbindung TC symbolisierende punktierte Linie verläuft lediglich aus Übersichtsgründen neben der Netzknoteneinrichtung ROU. Tatsächlich erfolgt diese transparente Verbindung TC unter aktiver Beteiligung der Netzknoteneinrichtung ROU.

Für eine Einrichtung der transparenten Verbindung TC werden jeweilige - nicht dargestellte - Netzwerkschnittstellen des ersten Netzelements PC1 bzw. der Netzknoteneinrichtung ROU eindeutig identifizierende Adressen berücksichtigt bzw. modifiziert.

Eine derartige, die jeweilige Netzwerkschnittstelle eindeutig identifizierende Adresse ist als MAC-Adresse (Media Access Control) bekannt. Die MAC-Adresse ist eine zur weltweit eindeutigen Identifikation eines Knotens (z.B. Hardware-Adresse einer Netzwerkschnittelle) dienende unveränderliche Hardware-adresse.

Die Netzknoteneinrichtung ROU empfängt Datenpakete vom ersten Netzelement PC1 an der die Netzknoteneinrichtung mit dem paketorientierten Netzwerk LAN verbindenden ersten Netzwerkschnittstelle IF1. Charakterisierende Nachrichtenkopfeinträge der vom ersten Netzelement PC1 übersandten Datenpakete weisen als Ursprungs-MAC-Adresse die MAC-Adresse der ersten Netzelements PC1 und als Ziel-MAC-Adresse die MAC-Adresse der ersten Netzwerkschnittstelle IF1 der Netzknoteneinrichtung ROU auf. Die Netzknoteneinrichtung ROU übergibt diese Datenpakete intern an eine die Netzknoteneinrichtung ROU mit der externen Einrichtung H verbindende zweiten Netzwerkschnittstelle IF2 wobei zuvor eine Änderung in den Ursprungs- bzw. Ziel-MAC-Adressen vorgenommen wird. Die als Ziel zu verwendende MAC-Adresse der externen Einrichtung H wurde während des Verbindungsaufbaus zwischen dem ersten Netzelement PC1 und der externen Einrichtung H an die Netzknoteneinrichtung ROU gesendet, wobei die übermittelnde Netzknoteneinrichtung ROU diese MAC-Adresse gespeichert hat. Die Netzknoteneinrichtung ROU stellt als Ursprungs-MAC-Adresse die MAC-Adresse der zweiten Netzwerkschnittstelle IF2 und als Ziel-MAC-Adresse die - vormals gespeicherte - MAC-Adresse der externen Einrichtung H ein. Für von der externen Einrichtung H gesendeten Datenpakete werden die jeweiligen MAC-Adressen entsprechend in umgekehrten Sinn umgesetzt.

Im Verlauf des Aufbaus der transparenten Verbindung TC wird dem ersten Netzelement PC1 von der externen Einrichtung H eine neue Adresse A1 (IP-Adresse) zugewiesen, mit der die vormals gültige Adresse A1 überschrieben wird.

Zur Kontrolle der transparenten Verbindung TC wird außerdem zwischen der externen Einrichtung H und der ersten Netzknoteneinrichtung PC1 eine sogenannte "Session ID" vereinbart, welche die Datenverbindungsschicht ("Session") der transparenten Verbindung TC eindeutig kennzeichnet.

Zur Kommunikation zwischen dem ersten Netzelement PC1 und der externen Einrichtung H auf Basis der transparenten Verbindung TC wird das PPPoE-Protokoll verwendet, wobei eine Adressumsetzung seitens der Netzknoteneinrichtung ROU unterbleibt. Stattdessen wird beim Verbindungsaufbau - siehe oben - der transparenten Verbindung TC bezogene Adresse A1 des Netzelements PC1 über die Netzknoteneinrichtung ROU unverändert über das Modem MOD an die externe Einrichtung H weitergegeben.

Wird der Aufbau der transparenten Verbindung beispielsweise durch das erste Netzelement PC1 veranlasst, erfolgt der Datenaustausch über einen - nicht dargestellten - PPPoE-Treiber im ersten Netzelement PC1. Die transparente Verbindung TC erfolgt bidirektional, d.h. auch Rückpakete von der externen Einrichtung H werden über die Netzknoteneinrichtung ROU ohne Adressumsetzung bzw. ohne Protokollumwandlung an das erste Netzelement PC1 durchgestellt.

Die Netzknoteneinrichtung ROU detektiert anhand der PPPoE-Nachrichtenkopfeinträge eine bestehende transparente Verbindung TC und veranlasst ggf. anhand von vorbehaltenen Protokollelementen - auch Verbindungssteuerungselemente genannt - wie beispielsweise einer Verbindungsabbauanforderung den Abbau der transparenten Verbindung TC. Zusätzlich zu einer dezidierten Verbindungsabbauanforderung durch ein Verbindungssteuerungselement wird von der Netzknoteneinrichtung ROU auch ein Ereignis ("Timeout") ausgelöst, sobald über einen vordefinierten Zeitraum kein Austausch von Datenpaketen nach dem PPPoE-Protokoll erfolgt ist. Die Netzknoteneinrichtung ROU beendet mit diesem Ereignis die Datenverbindung ("Session") auf Basis der transparenten Verbindung TC. Mit der Beendigung der transparenten Verbindung TC des ersten Netzelements mit der externen Einrichtung H ist für die Netzelemente PC1,PC2,PC3 eine - nicht dargestellte - transparente Verbindung mit der externen Einrichtung H aufbaubar.

Im folgenden wird in einer weiteren Ausführungsform eine Verwaltung von Kommunikationsverbindungen zwischen den Netzelementen PC1,PC2,PC3 mit der externen Einrichtung H erläutert. Externe Einrichtungen H wie z.B. ein Internet-Provider unterstützen häufig nur eine begrenzte Anzahl gleichzeitiger Verbindungen, im vorliegenden Fall aus dem paketorientierten Netzwerk LAN.

Unterstützt der Provider beispielsweise lediglich eine PPPoE-Verbindung, so sind gegebenenfalls andere bestehende transparente Kommunikationsverbindungen nach dem PPPoE-Protokoll zu unterbrechen, um dem betreffenden Netzelement PC1 einen exklusiven Kommunikationszugriff für die Dauer einer transparenten Verbindung PC zur Verfügung zu stellen.

Für den Fall, dass das Netzelement PC1 eine transparente Verbindung TC zu der externen Einrichtung H aufbauen will, während das zweite Netzelement PC2 eine derartige - nicht dargestellte - transparente Verbindung bereits unterhält, ist der exklusive Zugriff mittels einer transparenten Verbindung TC des ersten Netzelements abzuwehren. Dies ist ein Beispiel einer - z.B. in der Netzknoteneinrichtung ROU implementierten - Prioritätsregel nach einem sogenannten "First-Come-First-Serve"-Prinzip. Wird von der externen Einrichtung H eine größere Anzahl Verbindungen mit dem paketorientierten Netzwerk LAN ermöglicht, sind gegebenenfalls weitergehende Strategien zur Implementierung einer Prioritätsregel in der Netzknoteneinrichtung ROU zu implementieren.

Neben einer transparenten Verbindungen TC ist eine Kommunikation mit der externen Einrichtung H auf Basis von "herkömmlichen" - d.h. mit einer Adressumsetzung und Leitwegeführung erfolgenden - Verbindungen für die Netzelemente PC1,PC2,PC3 über die Netzknoteneinrichtung ROU weiterhin möglich.

Im folgenden wird unter weiterer Bezugnahme auf die Funktionseinheiten der Fig. 1 der schematische Aufbau der Netzknoteneinrichtung ROU näher erläutert.

In Fig. 2 ist ein Netzknotenelement ROU mit einer ersten Netzwerkschnittstelle IF1 und einer zweiten Netzwerkschnittstelle IF2 dargestellt. Die erste Netzwerkschnittstelle IF1 ist - vgl. Fig. 1 - mit den Netzelementen PC1,PC2,PC3 des paketorientierten Netzwerks LAN verbunden, die zweite Netzwerkschnittstelle IF2 sei mit der Modulier-/Demoduliereinrichtung MOD verbunden. Die beiden für bidirektionale Kommunikation vorgesehenen Schnittstellen IF1,IF2 sind im übrigen weitgehend identisch ausgestaltet.

Die erste und die zweite Netzwerkschnittstelle IF1, IF2 der Netzknoteneinrichtung ROU sind mit einer jeweiligen Schnittstellenübergabeeinheit LI1, LI2 verbunden. Die Schnittstellenübergabeeinheiten LI1,LI2 dienen einem Austausch von Datenpaketen der Netzknoteneinrichtung ROU über die jeweilige Netzwerkschnittstelle IF1, IF2 sowie zur Übergabe auf weitere, im folgenden beschriebene, interne Einheiten der Netzknoteneinrichtung ROU.

Die erste Schnittstellenübergabeeinheit LI1 ist mit einer Überwachungseinheit MON verbunden. Die Überwachungseinheit MON nimmt eine Überprüfung von Nachrichtenkopfeinträgen ausgetauschter Datenpakete vor. Des weiteren steuert die Überwachungseinheit MON eine erste und eine zweite Überbrückungseinheit BDP1, BDP2, welche eine Wegeführung der Datenpakete innerhalb der Netzknoteneinrichtung ROU steuern.

Detektiert die Überwachungseinheit MON ein über die Schnittstellenübergabeeinheit LI1 übergebenes Datenpaket als Verbindungssteuerungselement mit einem PPPoE-Nachrichtenkopfeintrag, so wird dieses Datenpaket von der Überwachungseinheit MON an die erste Überbrückungseinheit BDP1 über einen Weg SC an die zweite Überbrückungseinheit BDP2 übergeben, von welcher das Datenpaket an die Schnittstellenübergabeeinheit LI2 und schließlich an die Netzwerkschnittstelle IF2 weitergeleitet wird. In der Überwachungseinheit MON oder in einer der beiden Überbrückungseinheiten BDP1, BDP2 wird die oben genannte Modifikation der MAC-Adressen in den Datenpaketen vorgenommen. Alternativ hierzu wird dieser Austausch in einer - nicht dargestellten - Protokolleinheit vorgenommen.

Wird von der Überwachungseinheit MON dagegen kein PPPoE-Nachrichtenkopfeintrag detektiert, so wird das Datenpaket unter Einbeziehung weiterer im folgenden zu erläuternden Funktionseinheiten u.a. in ein Datenpaket gemäß des PPPoE-Protokolls konvertiert.

Dazu wird das betreffende Datenpaket wiederum an die erste Überbrückungseinheit BDP1 geleitet, von wo es diesmal - in der Zeichnung durch einen vertikalen Doppelpfeil dargestellt - an eine Wegeführungseinheit IPR weitergeleitet wird. Es handelt sich dabei um Datenpakete einer rein Internetprotokoll ("Pure IP") basierten Kommunikation ohne PPPoE-Datagramme, für welche einer Adressumsetzung der IP-Adresse und ggf. der TCP-Portnummer (Transfer Control Protocol) durchzuführen ist. Diese Adressumsetzung wird in der genannten Wegeführungseinheit IPR vorgenommen, sofern im Vorfeld eine Verbindung zur externen Einrichtung H aufgebaut wurde. Bei einer derartigen Adressumsetzung wird der Internetprotokoll-Nachrichtenkopfeintrag des im Ethernet-Datenpaket enthaltenen IP-Datagramms bearbeitet, indem ein Eintrag der IP-Adresse und ggf. der TCP-Portnummer in einem Datenfeld des IP-Nachrichtenkopfeintrags entsprechend geändert wird.

Das Datenpaket wird anschließend an eine PPP-Konvertiereinheit PPP übergeben, in der das IP-Datagramm mit einem PPP-Datenkopfeintrag versehen wird.

Das Datenpaket wird anschließend an eine PPPoE-Konvertierungseinheit übergeben, in der der analoge Bearbeitungsschritt mit einem PPPoE-Nachrichtenkopfeintrag erfolgt.

Das Datenpaket wird im Anschluss an die zweite Überbrückungseinheit BDP2 übergeben, welche, von der Überwachungseinheit MON gesteuert, eine Übergabe an die zweite Schnittstellenübergabeeinheit LI2 veranlasst. Von dieser wird das Datenpaket schließlich an die zweite Netzwerkschnittstelle IF2 übergeben.

Da eine bidirektionale Kommunikation vorliegt, erfolgt die Wegeführung der Datenpakete auch in der Gegenrichtung, welche analog zur vorhergehenden Beschreibung erfolgt.

## Patentansprüche

1. Verfahren zum transparenten Austausch von Datenpaketen mit einem paketorientierten Netzwerk (LAN), über das mehrere Netzelemente (PC1, PC2, PC3) und eine Netzknoteneinrichtung (ROU) verbunden sind, wobei
- den Netzelementen (PC1,PC2,PC3) nur innerhalb des Netzwerks (LAN) eindeutige Adressen (A1,A2,A3) zugewiesen sind,
- die Netzknoteneinrichtung (ROU) das paketorientierte Netzwerk (LAN) mit einer externen Einrichtung (H) verbindet und
- die Netzknoteneinrichtung (ROU) eine Adressumsetzung der im paketorientierten Netzwerk (LAN) zugewiesenen Adresse (A1,A2,A3) eines Netzelements (PC1,PC2,PC3) in eine für die externe Einrichtung (H) gültige Adresse vornimmt,
- Aufbau einer Verbindung zwischen einem ersten Netzelement (PC1) und der externen Einrichtung (H),
- Überprüfung von Nachrichtenkopfeinträgen der zwischen der externen Einrichtung (H) und dem ersten Netzelement (PC1) ausgetauschten Datenpakete, **dadurch gekennzeichnet dass**
- im Falle einer Detektierung eines ein erweitertes paketorientiertes Protokoll charakterisierenden Eintrags Einrichtung einer vorübergehend transparenten Verbindung (TC) zwischen dem ersten Netzelement (PC1) und der externen Einrichtung (H), wobei die dem ersten Netzelement (PC1) durch die externe Einrichtung für die Dauer der transparenten Verbindung zugewiesene Adresse (A1) ohne.Adressumsetzung an die externe Einrichtung (H) übergeben wird.

2. Verfahren nach Anspruch 1,
**dadurch gekennzeichnet,**
**dass** beim Aufbau der Verbindung zwischen dem ersten Netzelement (PC1) und der externen Einrichtung (H) die Adresse (A1) des ersten Netzelements (PC1) durch die externe Einrichtung zugewiesen wird.

3. Verfahren nach einem der Ansprüche 1 oder 2,
**dadurch gekennzeichnet,**
**dass** zwischen der externen Einrichtung (H) und der Netzknoteneinrichtung (ROU) eine Modulier-/Demoduliereinrichtung (MOD) angeordnet ist.

4. Verfahren nach einem der vorhergehenden Ansprüche,
**dadurch gekennzeichnet,**
**dass** vor einer Einrichtung der transparenten Verbindung (TC) für das erste Netzelement (PC1) eine Überprüfung erfolgt, ob für mindestens ein anderes Netzelement (PC2,PC3) oder der Netzknoteneinrichtung (ROU) bereits eine derartige Verbindung besteht.

5. Verfahren nach einem der vorhergehenden Ansprüche,
**dadurch gekennzeichnet,**
**dass** eine maximale Anzahl transparenter Verbindungen (TC) in Abhängigkeit von Vorgaben der externen Einrichtung (H) vorgebbar ist.

6. Verfahren nach Anspruch 5,
**dadurch gekennzeichnet,**
**dass** die Einrichtung der transparenten Verbindung (TC) des ersten Netzelements (PC1) zurückgewiesen wird.

7. Verfahren nach Anspruch 5,
**dadurch gekennzeichnet,**
**dass** eine bestehende Verbindung zu einem Netzelement (PC2) gelöst wird und im Anschluss die Einrichtung der transparenten Verbindung (TC) des weiteren Netzelements (PC1) erfolgt.

8. Verfahren nach einem der vorhergehenden Ansprüche,
**dadurch gekennzeichnet,**
**dass** eine bestehende transparente Verbindung (TC) beendet wird, sobald eine Verbindungsabbauanforderung detektiert wird.

9. Verfahren nach Anspruch 8,
**dadurch gekennzeichnet,**
**dass** die Verbindungsabbauanforderung anhand einer überschrittenen Zeitperiode, innerhalb der kein Austausch von Datenpaketen nach dem erweiterten paketorientierten Protokoll erfolgt ist, ausgelöst wird.

10. Verfahren nach einem der vorhergehenden Ansprüche,
**dadurch gekennzeichnet,**
**dass** die Kommunikation der Netzelemente (PC1,PC2,PC3) untereinander und/oder mit der Netzknoteneinrichtung (ROU) alternativ entweder gemäß dem Internetprotokolls oder gemäß dem PPPoE-Kommunikationsprotokoll erfolgt.

11. Netzknotenelement (ROU) zur Unterstützung eines transparenten Austausches von Datenpaketen, umfassend
- mindestens eine Netzwerkschnittstelle (IF1) zu einem mehrere Netzelemente (PC1,PC2,PC3) verbindenden paketorientierten Netzwerk (LAN), wobei den Netzelementen (PC1, PC2, PC3) nur innerhalb des Netzwerks (LAN) eindeutige Adressen (A1, A2, A3) zugewiesen sind,
- mindestens eine Netzwerkschnittstelle (IF2) zu einer externen Einrichtung (H),
- mindestens eine Wegeführungseinheit (IPR) zur Adressumsetzung der im paketorientierten Netzwerk (LAN) zugewiesenen Adresse (A1,A2,A3) eines Netzelements (PC1,PC2,PC3) in eine für die externe Einrichtung (H) gültige Adresse,
- mindestens eine Überwachungseinheit (MON) zur Überprüfung von Nachrichtenkopfeinträgen der zwischen der externen Einrichtung (H) und einem ersten Netzelement (PC1) ausgetauschten Datenpakete, **dadurch gekennzeichnet dass** durch diese im Falle einer Detektierung eines ein erweitertes paketorientiertes Protokoll charakterisierenden Eintrags eine Einrichtung einer vorübergehend transparenten Verbindung (TC) zwischen dem ersten Netzelement (PC1) und der externen Einrichtung (H) veranlasst wird, wobei keine Adressumsetzung der dem ersten Netzelement (PC1) durch die externe Einrichtung (H) für die Dauer der transparenten Verbindung (TC) zugewiesenen Adresse (A1) an die externe Einrichtung (H) erfolgt.

12. Netzknotenelement (ROU) nach Anspruch 11,
**dadurch gekennzeichnet,**
**dass** das Netzknotenelement (ROU) als Router ausgestaltet ist.

13. Netzknotenelement (ROU) nach Anspruch 11 oder 12,
**dadurch gekennzeichnet,**
**dass** die Überwachungseinheit (MON) mindestens eine Überbrückungseinheit (BDP1,BDP2) steuert.

## Claims

1. Method for transparently exchanging data packets with a packet-oriented network (LAN), via which a number of network elements (PC1, PC2, PC3) and a network node device (ROU) are connected, whereby
- the network elements (PC1, PC2, PC3) are allocated unique addresses (A1, A2, A3) only within the network (LAN),
- the network node device (ROU) connects the packet-oriented network (LAN) to an external device (H), and
- the network node device (ROU) performs an address conversion of the address (A1, A2, A3) of a network element (PC1, PC2,PC3), said address having been allocated in the packet-oriented network (LAN), into an address valid for the external device (H),
- a connection is set up between a first network element (PC1) and the external device (H),
- message header entries of the data packets exchanged between the external device (H) and the first network element (PC1) are verified, **characterised in that**
- if an entry is detected that characterises an expanded packet-oriented protocol, a temporarily transparent connection (TC) is established between the first network element (PC1) and the external device (H), whereby the address (A1) allocated to the first network element (PC1) by the external device for the duration of the transparent connection is transferred to the external device (H) without address conversion.

2. Method according to Claim 1,
**characterised in that**
the address (A1) of the first network element (PC1) is allocated by the external device when the connection is set up between the first network element (PC1) and the external device (H).

3. Method according one of Claims 1 or 2,
**characterised in that**
a modulation/demodulation device (MOD) is disposed between the external device (H) and the network node device (ROU).

4. Method according one of the above claims,
**characterised in that**
a verification is carried out before the transparent connection (TC) for the first network element (PC1) is set up, to determine whether a connection of the same type already exists for at least one other network element (PC2, PC3) or for the network node device (ROU).

5. Method according one of the above claims,
**characterised in that**
a maximum number of transparent connections (TC) may be defined depending on the specifications of the external device (H).

6. Method according to Claim 5,
**characterised in that**
the establishment of the transparent connection (TC) of the first network element (PC1) is rejected.

7. Method according to Claim 5,
**characterised in that**
an existing connection to a network element (PC2) is cancelled and the transparent connection (TC) of the further network element (PC1) is then established.

8. Method according one of the above claims, **characterised in that**
an existing transparent connection (TC) is terminated as soon as a connection release request is detected.

9. Method according to Claim 8,
**characterised in that**
the connection release request is triggered when a predefined period, during which no data packets have been exchanged according to the expanded packet-oriented protocol, has been exceeded.

10. Method according one of the above claims,
**characterised in that**
the communication of the network elements (PC1, PC2, PC3) with one another and/or with the network node device (ROU) is alternatively effected either according to the Internet protocol or according to the PPPoE communication protocol.

11. Network node element (ROU) for supporting a transparent exchange of data packets, comprising
- at least one network interface (IF1) to a packet-oriented network (LAN) connecting a number of network elements (PC1,PC2, PC3), whereby said network elements (PC1,PC2, PC3) are allocated unique addresses (A1, A2, A3) only within the network (LAN),
- at least one network interface (IF2) to an external device (H),
- at least one routing unit (IPR) for performing an address conversion of the address (A1, A2, A3) of a network element (PC1, PC2, PC3) - said address having been allocated in the packet-oriented network (LAN) - into an address valid for the external device (H),
- at least one monitoring unit (MON) for monitoring message header entries of the data packets exchanged between the external device (H) and a first network element (PC1), **characterised in that** - if an entry is detected that characterises an expanded packet-oriented protocol - a temporarily transparent connection (TC) is established by said monitoring unit (MON) between the first network element (PC1) and the external device (H), and no address conversion of the address (A1) allocated to the first network element (PC1) by the external device (H) for the duration of the transparent connection (TC) is performed to the external device (H).

12. Network node element (ROU) according to Claim 11,
**characterised in that**
the network node element (ROU) is configured as a router.

13. Network node element (ROU) according to Claim 11 or 12,
**characterised in that**
the monitoring unit (MON) controls at least one bridging device (BDP1, BDP2).

## Revendications

1. Procédé pour l'échange transparent de paquets de données avec un réseau (LAN) orienté paquet, par lequel plusieurs éléments de réseau (PC1, PC2, PC3) et un dispositif de noeud de réseau (ROU) sont reliés,
- des adresses (A1, A2, A3) univoques étant attribuées aux éléments de réseau (PC1, PC2, PC3) uniquement à l'intérieur du réseau (LAN),
- le dispositif de noeud de réseau (ROU) reliant le réseau (LAN) orienté paquet avec un dispositif (H) externe et
- le dispositif de noeud de réseau (ROU) effectuant une conversion d'adresse de l'adresse (A1, A2, A3) attribuée dans le réseau (LAN) orienté paquet, d'un élément de réseau (PC1, PC2, PC3) en une adresse valable pour le dispositif (H) externe,
- établissement d'une liaison entre un premier élément de réseau (PC1) et le dispositif (H) externe,
- vérification d'enregistrement d'en-têtes de message des paquets de données échangés entre le dispositif (H) externe et le premier élément de réseau (PC1), **caractérisé en ce que**
- dans le cas d'une détection d'un enregistrement caractérisant un protocole élargi orienté paquet, mise en place d'une liaison (TC) provisoirement transparente entre le premier élément de réseau (PC1) et le dispositif (H) externe, l'adresse (A1) attribuée au premier élément de réseau (PC1) par le dispositif externe pour la durée de la liaison transparente étant transmise sans conversion d'adresse au dispositif (H) externe.

2. Procédé selon la revendication 1,
**caractérisé en ce que**,
lors de l'établissement de la liaison entre le premier élément de réseau (PC1) et le dispositif (H) externe, l'adresse (A1) du premier élément de réseau (PC1) est attribuée par le dispositif externe.

3. Procédé selon l'une quelconque des revendications 1 ou 2,
**caractérisé en ce que**,
un dispositif de modulation/démodulation (MOD) est disposé entre le dispositif (H) externe et le dispositif de noeud de réseau (ROU).

4. Procédé selon l'une quelconque des revendications précédentes,
**caractérisé en ce que**,
avant l'établissement de la liaison transparente (TC) pour le premier élément de réseau (PC1), on effectue une vérification pour savoir si une telle liaison existe déjà pour au moins un autre élément de réseau (PC2, PC3) ou le dispositif de noeud de réseau (ROU).

5. Procédé selon l'une quelconque des revendications précédentes,
**caractérisé en ce que**,
un nombre maximum de liaisons transparentes (TC) est prédéfinissable en fonction des spécifications du dispositif (H) externe.

6. Procédé selon la revendication 5,
**caractérisé en ce que**
l'établissement de la liaison transparente (TC) du premier élément de réseau (PC1) est refusé.

7. Procédé selon la revendication 5,
**caractérisé en ce que**
une liaison existante avec un élément de réseau (PC2) est supprimée et on effectue ensuite l'établissement de la liaison transparente (TC) du premier élément de réseau (PC1).

8. Procédé selon l'une quelconque des revendications précédentes,
**caractérisé en ce que**
une liaison transparente (TC) existante est achevée dès qu'une demande de coupure de liaison est détectée.

9. Procédé selon la revendication 8,
**caractérisé en ce que**
la demande de coupure de liaison est déclenchée à l'aide d'une période de temps dépassée, pendant laquelle aucun échange de paquets de données n'a été effectué selon le protocole élargi orienté paquet.

10. Procédé selon l'une quelconque des revendications précédentes,
**caractérisé en ce que**,
la communication des éléments de réseau (PC1, PC2, PC3) entre eux et/ou avec le dispositif de noeud de réseau (ROU) s'effectue en alternative soit selon le protocole Internet soit selon le protocole de communication PPPoE.

11. Elément de noeud de réseau (ROU) pour supporter un échange transparent de paquets de données, comprenant
- au moins une interface de réseau (IF1) vers un réseau (LAN) orienté paquet et reliant plusieurs éléments de réseau (PC1, PC2, PC3), des adresses (A1, A2, A3) univoques étant attribuées uniquement à l'intérieur du réseau (LAN) aux éléments de réseau (PC1, PC2, PC3),
- au moins une interface de réseau (IF2) vers un dispositif (H) externe,
- au moins une unité d'acheminement (IPR) pour la conversion de l'adresse (A1, A2, A3), attribuée dans le réseau (LAN) orienté paquet, d'un élément de réseau (PC1, PC2, PC3) en une adresse valable pour le dispositif (H) externe,
- au moins une unité de contrôle (MON) pour la vérification d'enregistrement d'en-têtes de message des paquets de données échangés entre le dispositif (H) externe et un premier élément de réseau (PC1), **caractérisé en ce que**, dans le cas d'une détection d'un enregistrement caractérisant un protocole élargi orienté paquet, cette unité ordonne une mise en place d'une liaison (TC) provisoirement transparente entre le premier élément de réseau (PC1) et le dispositif (H) externe, aucune conversion de l'adresse (A1) attribuée au premier élément de réseau (PC1) par le dispositif (H) externe pour la durée de la liaison transparente (TC) ne s'effectuant à destination du dispositif (H) externe.

12. Elément de noeud de réseau (ROU) selon la revendication 11,
**caractérisé en ce que**,
l'élément de noeud de réseau (ROU) est conçu comme routeur.

13. Elément de noeud de réseau (ROU) selon la revendication 11 ou 12,
**caractérisé en ce que**,
l'unité de contrôle (MON) commande au moins une unité de pontage (BDP1, BDP2).
